# EUROPEAN PATENT APPLICATION

(11) **EP 1 107 632 A1**
(43) Date of publication of application: **13.06.2001**
(21) Application number: 00308081.9
(22) Date of filing: 18.09.2000
(51) Int. Cl.: H04Q 7/38

(54) **Packet switched mobile radio telecommunications system with more effective hard handover**

(30) Priority: 10.12.1999 EP 99309979
(71) Applicant: LUCENT TECHNOLOGIES INC., Murray Hill, New Jersey 07974-0636 (US)
(72) Inventor: Costa, M., Chippenham, Wiltshire SN5 6PP (GB); Roberts, M., Prittlewell, Essex SS2 5EB (GB); Sivagnanasundaram, S., Tooting, London SW17 4EJ (GB); Jarwis, A. W., Tetbury, Gloucestershire GL8 8HB (GB)
(74) Representative: Buckley, Christopher Simon Thirsk

(57) **Abstract**

In a packet switched mobile radio telecommunications system such as UMTS or GSM, on hard handover of a mobile 18 a target RNC 24 requests a direct link 36 to a serving controller 22, which sends uplink frames from the mobile 18 both to the TRNC 24 and to the core network 10; the core network 10 sends downlink frames to the TRNC 24. The TRNC decides when to complete the handover, and rebuilds frames when necessary.

## Description

This invention relates to a mobile radio telecommunications system such as the Universal Mobile Telephone System (UMTS) or the Global System for Mobile communications (GSM), operating on a packet switching principle, and relates especially to the arrangements made for hard handover in such a system.

As a mobile user moves over the ground, handover of the mobile from one radio channel to another, i.e. from one network controller to another, is a frequent requirement. As the mobile leaves the old channel and attaches to the new channel side, the disconnection and reconnection lead to a break in the path and loss of data frames, both uplink and downlink, on the radio interface. There is thus a degradation of radio performance.

It is an object of the invention to provide hard handover arrangements in which the break in connection to a mobile is smaller/shorter, thus improving performance.

According to the invention, in a packet switched mobile radio telecommunications system a method of handing over control of a mobile system from a serving controller to a target controller in which the serving controller sends a handover request message to the core network and the core network sends a handover required signal to the target controller, characterized by the further steps of:-
the target controller requesting a direct link to the serving controller;
the serving controller sending uplink frames from the mobile system to the target controller over said direct link and simultaneously sending these frames to the core network;
the core network sending downlink frames for the mobile system to the target controller and to the serving controller;
and the target controller deciding when to complete the handover and sending a handover command signal to the serving controller via the core network..

Also according to the invention a controller for a packet switched mobile radio telecommunications system characterized by being arranged so that, on receipt from a core network of the system of a handover required message related to a mobile system, the controller sends to the controller currently serving the mobile system a request for a direct link.

The invention will now be described by way of example only with reference to the accompanying drawings in which:-
Figure 1 illustrates schematically a part of a packet switched mobile radio telecommunications network, (the UMTS); and
Figures 2, 3, 4 and 5 illustrate four stages in a hard handover according to the invention.

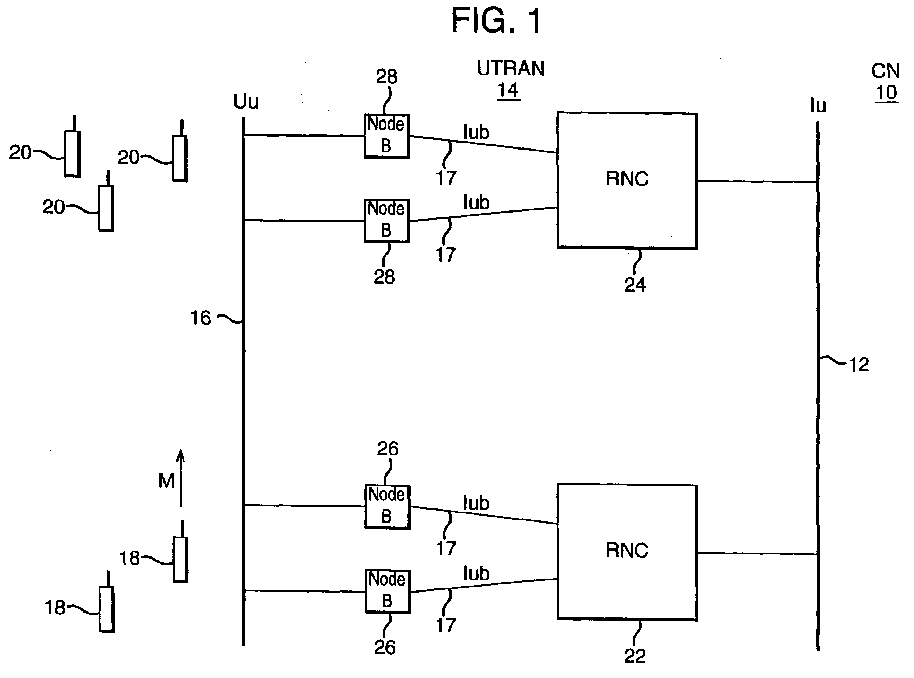

In Figure 1, a Core Network (CN) 10 has an interface 12, the Iu interface, to the UMTS Terrestrial Radio Access Network (UTRAN) 14, and the UTRAN 14 has an interface 16, the Uu interface, to a number of Mobile Systems (MSs) 18, 20.

Within the UTRAN 14 are a number of Radio Network Controllers (RNC) 22, 24, two only being illustrated, each RNC controlling a number of Node Bs 26, 28, two only being shown for each RNC. Each Node B is connected to its RNC by an Iub link 17. RNC 22 controls the MSs 18, 18' through Node Bs 26 and RNC 24 controls the MSs 20 through Node Bs 28 .

In the Figure, the network is the UMTS network; in a GSM network the equivalent building block to an RNC is termed a Base Station Controller (BSC); a Node B is termed a Base Transceiver Station (BTS); and the Uu interface is termed the radio interface.

The RNCs 22, 24 build frames containing data, send the frames to a Node B 26, 28 and control a mobile system as it moves over the ground. A Node B receives frames from an RNC, and modulates the data for passage to the radio interface Uu 16 and thence to a mobile.

The UMTS is arranged to have a control plane and a user plane; the control plane is arranged to control signalling between Node Bs and RNCs, to control the allocation of requests for resources, and to control handover requests. The user plane is responsible for handling the actual data.

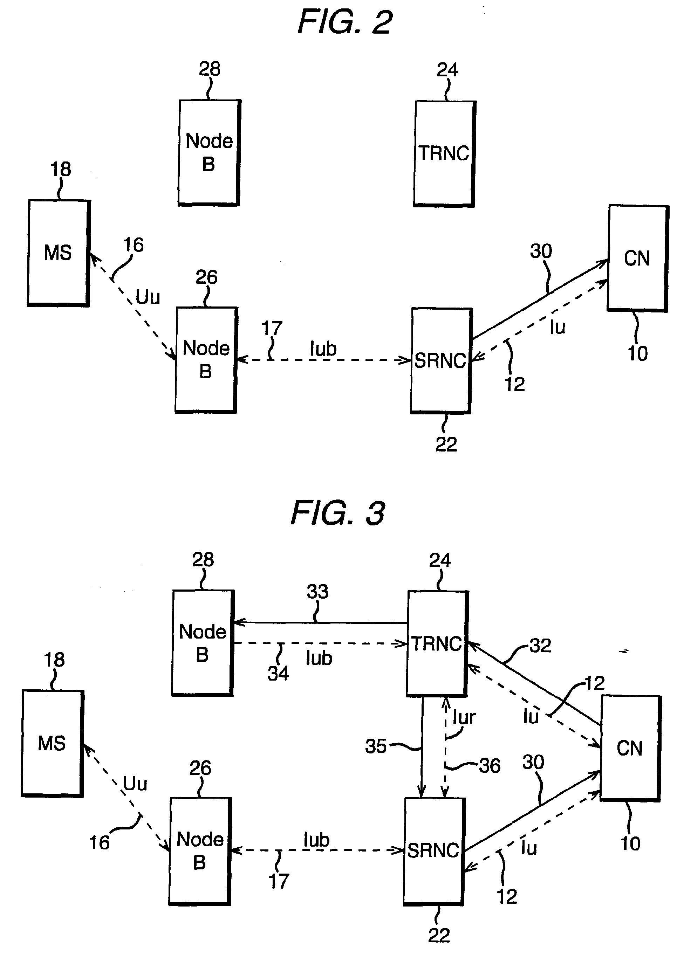

Suppose one of the mobile systems 18 moves upwards in Figure 1 as shown by the Arrow M, so that control of the MS 18 must pass from a Node B 26 controlled by RNC 22 to a Node B 28 controlled by RNC 24. The first step is illustrated in Figure 2, in which the Iu interface 12, the Uu interface 16, and the Iub link 17 between the RNCs and the Node Bs are indicated by double-headed dotted arrows. The serving RNC 22 sends a handover request signal 30 to CN 10 over the Iu interface 12. As shown in Figure 3, the CN 10 sends a handover required signal 32 over the Iu interface 12 to the target RNC 24, and in response the TRNC 24 sends a command signal 33 which sets up an Iub link 34 to the Node B 28. The TRNC 24 also sends a command signal 35 setting up an Iur link 36 between TRNC 24 and SRNC 22.

For a smooth handover of the MS 18, the SRNC 22 must connect the appropriate MS through the TRNC 24; a reference is used, which may be the actual MS identity or a reference allocated to the MS 18 by the SRNC 22 while that mobile is under its control. This reference is supplied by the SRNC 22 to the TRNC 24 over the Iur link 36.

On supply of the reference, the TRNC 24 receives uplink frames from MS 18 on the serving channel side via Node B 26 and SRNC 22 while the SRNC 22 simultaneously sends uplink frames to CN 10. The downlink frames are supplied by the CN 10 on the Iu interface 12.

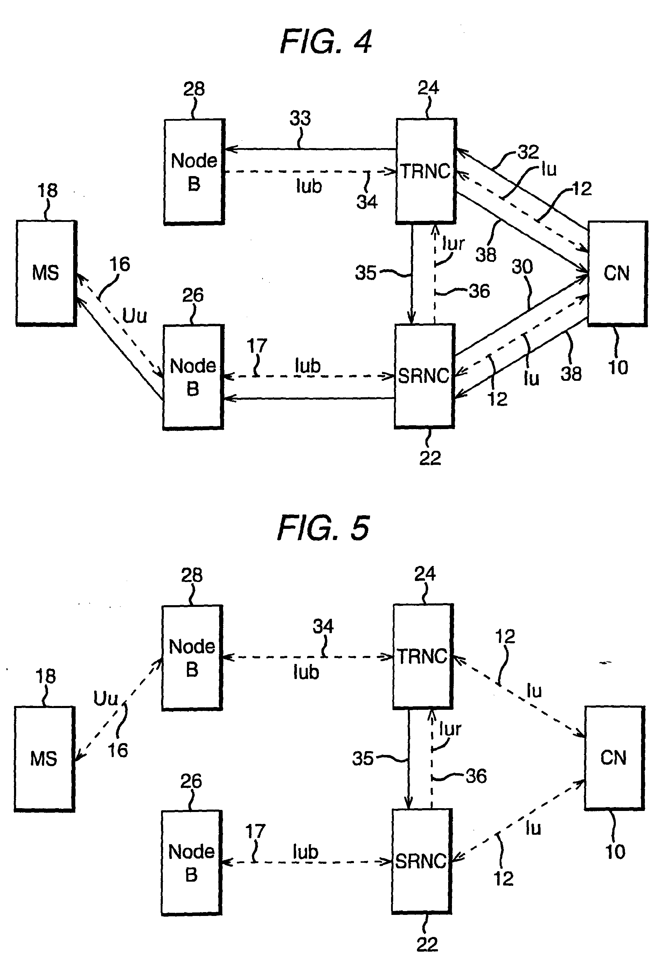

The TRNC 24 can now decide how to rebuild the frames from MS 18 when disconnection and reconnection occur on the radio interface, and then sends a handover command signal 38 to the SRNC 22 via the CN 10, as shown in Figure 4. The MS 18 disconnects from the old channel and connects to the new channel over the Uu link 16 to Node B 28, as shown in Figure 5. The frames received on the old channel and on the new channel are both received by the TRNC 24, thus the break in the user plane path is substantially reduced, and can be regarded as almost seamless.

In previous arrangements the CN was in control of the handover, but was forced to operate on signalling which was delayed; the CN was therefore unable to determine whether a frame had been repeated. By application of the invention, the risk of repeated frames is much reduced and handover is more effective.

## Claims

1. In a packet switched mobile radio telecommunications system, a method of handing over control of a mobile system (18) from a serving controller (22) to a target controller (24) in which the serving controller (22) sends a handover request message (30) to the core network (10) and the core network sends a handover required message (32) to the target controller, characterized by the further steps of:-
the target controller (24) requesting (35) a direct link (36) to the serving controller (22);
the serving controlling (22) sending uplink frames from the mobile system (18) to the target controller (24) over said direct link (36) and simultaneously sending these frames to the core network (10);
the core network (10) sending downlink frames for the mobile system (18) to the target controller (24) and to the serving controller (22) simultaneously;
the target controller (24) deciding when to complete the handover; and
the target controller (24) sending a handover command signal (38) to the serving controller (22) via the core network (10).

2. A method according to Claim 1 in which said direct link is an Iur link 36.

3. A method according to Claim 1 or Claim 2 in which the target controller (24) rebuilds frames received from and addressed to the mobile system (18) before sending the handover command signal (38).

4. A method according to any one of Claims 1, 2 or 3 in which the serving controller (22) sends to the target controller (24) the identity of the mobile system (18).

5. A method according to any one of Claims 1, 2 or 3 in which the serving controller (22) sends to the target controller (24) a reference allocated to the mobile system (18) by the serving controller (22).

6. A method according to any preceding claim in which the serving and target controllers are radio network controllers (22, 24).

7. A controller (22, 24) for a packet switched mobile radio telecommunications system characterized by being arranged so that, on receipt from a core network (10) of the system of a handover required message (32) related to a mobile system (18), the controller (24) sends to the controller (22) currently serving the mobile system (18) a request for a direct link.

8. A controller according to Claim 7 in which the direct link is a Iur link (36).

9. A controller according to Claim 7 or Claim 8 further arranged to receive uplink frames from controller (22) currently serving the mobile system (18), to receive downlink frames from a core network (10) of the system, to decide when to complete the handover of the mobile system (18), and to send a handover command signal (38).

10. A controller according to Claim 9 further arranged to rebuild frames received from and addressed to the mobile system (18) before sending the handover command signal (38).

11. A controller for a packet switched mobile radio telecommunications system characterized by being arranged so that, on receipt of a request from a target controller (22) the controller (24) sets up a direct link (36) to the target controller (22), and sends uplink frames from a mobile system (18) to be handed over to the target controller (22) and to the core network (10) of the system simultaneously.

12. A controller (24) according to Claim 11 further arranged to send to the target controller (22) the identity of the mobile system (18).

13. A controller (24) according to Claim 11 further arranged to send to the target controller (22) a reference allocated to the mobile system (18) by the controller (22).

14. A controller according to any one of claims 7 to 13 in which the telecommunications systems in the Universal Mobile Telephone System and the controller (22, 24) is a radio network controller.

15. A controller according to any one of claims 7 to 13 in which the telecommunications system is the Global System for Mobile communications and the controller (22, 24) is a Base Station Controller.
